(19) **Europäisches Patentamt European Patent Office Office européen des brevets**

(11) **EP 3 023 454 B1**

(12) **EUROPEAN PATENT SPECIFICATION**

(45) Date of publication and mention of the grant of the patent:
**22.08.2018 Bulletin 2018/34**

(21) Application number: **15770324.0**

(22) Date of filing: **20.03.2015**

(51) Int Cl.:
*C08J 9/18* (2006.01)     *B32B 5/18* (2006.01)
*B32B 27/32* (2006.01)    *C08J 9/16* (2006.01)

(86) International application number:
**PCT/JP2015/058439**

(87) International publication number:
**WO 2015/146820 (01.10.2015 Gazette 2015/39)**

(54) **POLYOLEFIN RESIN FOAM PARTICLES, FOAM-PARTICLE MOULDED BODY, AND COMPOSITE STACKED BODY INCLUDING SAID MOULDED BODY**

POLYOLEFINHARZSCHAUMPARTIKEL, SCHAUMPARTIKELFORMKÖRPER UND VERBUNDSTAPELKÖRPER MIT DIESEM FORMKÖRPER

PARTICULES EN MOUSSE DE RÉSINE DE POLYOLÉFINE, CORPS MOULÉ EN PARTICULES DE MOUSSE, ET CORPS COMPOSITE EMPILÉ COMPRENANT LEDIT CORPS MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2014 JP 2014067239**

(43) Date of publication of application:
**25.05.2016 Bulletin 2016/21**

(73) Proprietor: **JSP Corporation Chiyoda-ku, Tokyo 100-0005 (JP)**

(72) Inventors:
• **SHINOHARA, Mitsuru Yokkaichi-shi Mie 510-0881 (JP)**
• **OIKAWA, Masaharu Yokkaichi-shi Mie 510-0881 (JP)**

(74) Representative: **Gille Hrabal Brucknerstrasse 20 40593 Düsseldorf (DE)**

(56) References cited:
**EP-A1- 1 514 896      EP-A1- 2 447 311**
**JP-A- S62 290 735     JP-A- 2000 000 894**
**JP-A- 2000 344 928    JP-A- 2001 162 640**
**JP-A- 2001 162 692    JP-A- 2003 039 565**
**JP-A- 2004 115 785    JP-A- 2004 176 047**
**JP-A- 2004 249 558    JP-A- 2009 506 149**
**JP-A- 2011 026 436    US-A1- 2009 169 895**

• **DATABASE WPI Week 200544 Thomson Scientific, London, GB; AN 2005-428903 XP002757832, & JP 2005 139350 A (JSP CORP) 2 June 2005 (2005-06-02)**
• **DATABASE WPI Week 201111 Thomson Scientific, London, GB; AN 2011-B06276 XP002757833, & JP 2011 016914 A (JSP CORP) 27 January 2011 (2011-01-27)**

**EP 3 023 454 B1**

**Description**

Technical Field

The present invention relates to a use of polyolefin resin expanded beads for producing a composite laminated body, and a composite laminated body comprising a polyolefin resin expanded beads molded body and a thermosetting resin layer that is laminated and adhered to the molded body.

Background Art

A composite laminated body has been known that contains a synthetic resin foam body as a core material and a thermosetting resin layer that is adhered and laminated on the surface thereof. In particular, a composite molded body laminated with a fiber-reinforced thermoplastic resin containing reinforcing fibers (which may be hereinafter referred to as FRP) has been favorably used as a bathtub, a water tank, a temporary lavatory, a chair, a waterproof pan, a vehicle panel, a vehicle body, a ship body, a float, a surfboard, a snowboard, a helmet and the like, due to the excellent balance between strength and lightweight property and the excellent durability thereof.

However, FRP suffers heat generation in the curing reaction thereof, and thus has a problem that the thermosetting resin layer may be deteriorated due to the own reaction heat in the portion having a large thickness. Accordingly, FRP has a limitation in the enhancement of the mechanical properties, such as the bending strength, by increasing the thickness of the composite laminated body, and also has a restriction in the resulting shape due to the increase of the weight thereof and the like.

For providing a composite molded body having an increased thickness while avoiding the problem, a synthetic resin foam body, such as a urethane foam body and a polyvinyl chloride foam body, has been used as a core material for FRP. However, the foam bodies are generally in the form of plate, and thus are necessarily cut to fit to the product shape.

There is a polystyrene resin expanded beads molded body as a synthetic resin foam body excellent in moldability. However, the polystyrene resin expanded beads molded body has poor solvent resistance and may be dissolved with a monomer for forming the thermosetting resin layer, and thus the surface of the expanded beads molded body is necessarily coated with a solvent-resistant resin or the like in advance. Furthermore, the polystyrene resin expanded beads molded body has poor heat resistance, and there is a restriction in the usable thermosetting resin and the curing conditions, for preventing the molded body from being melted by the curing heat of the thermosetting resin.

There is a polyolefin resin expanded beads molded body as an expanded beads molded body excellent in heat resistance. However, the polyolefin resin expanded beads molded body has a problem of poor adhesiveness to a thermosetting resin.

For solving the problems, the present inventors have proposed an expanded beads molded body containing a polypropylene resin having blended therein a maleic anhydride-modified polyolefin (PTL 1). However, the technique has a problem in productivity since the expanded beads are liable to stick to the mold on molding.

For solving the problem, the present inventors have proposed an expanded beads molded body obtained through in-mold molding of expanded beads of a mixed resin containing a polyolefin resin having blended therein a styrene-diene copolymer (PTL 2).

However, the expanded beads molded body by PTL 2 is not necessarily sufficient in the adhesiveness to a thermosetting resin on the surface of the molded body, and for providing a sufficient adhesion strength, it is necessary to cut the surface of the molded body by such a method as slicing, so as to expose the cross section of the foam.

For solving the problem, the present inventors have proposed a technique for enhancing the adhesiveness to a thermosetting resin by using an expanded beads molded body obtained through in-mold molding of expanded beads which are formed of a mixture of a polyolefin resin and a styrene-diene copolymer and have a surface portion thereof that has an increased content of the styrene-diene copolymer (PTL 3).

However, the technique described in PTL 3 requires a crosslinking process, and thus has a problem of a prolonged processing time in the production of the expanded beads.

PTL 4 discloses foamed polyolefin resin beads which are used in the field of packaging for electronic devices.

PTL 5, an earlier application of the present applicant, discloses polypropylene resin foamed particles for forming a molded article by foaming the resin particles comprising a core layer containing polypropylene resin, and a coating layer having a specified thickness containing a different polypropylene resin, and optionally another resin. A surface decorative material may be laminated and integrated on at least a portion of the surface of the expanded beads-molded article. The use of multilayered expanded polyolefin beads is not mentioned in the document. A thermosetting resin layer containing a fibrous material is not disclosed in PTL 5, either

PTL 1: JP-A-7-258450

PTL 2: JP-A-9-59417
PTL 3: JP-A-10-273551
PTL 4: US 2009/0169895
PTL 5: EP 2 447 311

Disclosure of Invention

An object of the present invention is to provide a use of polyolefin resin expanded beads that are excellent in solvent resistance and also excellent in adhesiveness to a thermosetting resin for producing a composite laminated body, and a composite laminated body comprising a polyolefin expanded beads molded body and a thermosetting resin layer laminated and adhered to a surface of the molded body.

As a result of earnest investigations made by the present inventors for solving the problems, it has been found that an expanded beads molded body (not claimed) that is excellent in fusibility among the expanded beads and excellent in adhesiveness to a thermosetting resin can be efficiently obtained with polyolefin resin multi-layer expanded beads that have a multi-layer structure containing a core layer in a foamed state and a cover layer coated thereon, in which the foam core layer is constituted by a polyolefin resin, and the cover layer is constituted by a mixed resin having a particular mixing ratio, and thus the present invention has been completed.

The present invention provides the following items (1) to (6).

(1) Use of polyolefin resin expanded beads for producing a composite laminated body, wherein the polyolefin resin expanded beads comprise multi-layer expanded beads containing a core layer in a foamed state containing a polyolefin resin and a cover layer coated on the core layer, the cover layer containing a mixed resin of a polyolefin resin (A) and at least one resin (B) selected from a polystyrene resin and a polyester resin, and the mixed resin having a weight ratio (A/B) of the polyolefin resin (A) and the resin (B) of from 15/85 to 90/10, wherein the composite laminated body comprises a thermosetting resin layer containing a fibrous material.

(2) Use of the polyolefin resin expanded beads according to the item (1), wherein a melting point (Ts) of the polyolefin resin (A) contained in the cover layer is lower than a melting point (Tc) of the polyolefin resin contained in the core layer.

(3) Use of the polyolefin resin expanded beads according to the item (1) or (2), wherein the mixed resin contained in the cover layer further contains a compatibilizing agent of the polyolefin resin (A) and the resin (B), and a content of the compatibilizing agent is from 1 to 20 parts by weight per 100 parts by weight of the total amount of the polyolefin resin (A) and the resin (B).

(4) Use of the polyolefin resin expanded beads according to any one of the items (1) to (3), wherein the polyolefin resin contained in the core layer is a polypropylene resin.

(5) A composite laminated body comprising a polyolefin resin expanded beads molded body and a thermosetting layer laminarted and adhered to a surface of the molded body,
Wherein the polyolefin resin expanded beads molding body is obtained through in-mold molding of the polyolefin resin expanded beads,
and wherein the polyolefin resin expanded beads comprise multi-layer expanded beads containing a core layer in a foamed state containing a polyolefin resin and a cover layer coated on the core layer, the cover layer containing a mixed resin of a polyolefin resin (A) and at least one resin (B) selected from a polystyrene resin and a polyester resin, and the mixed resin having a weight ratio (A/B) of the polyolefin resin (A) and the resin (B) of from 15/85 to 90/10, wherein the composite laminated body comprises a thermosetting resin layer containing a fibrous material.

(6) The composite laminated body according to the item (5),

wherein a resin contained in the thermosetting resin layer is an unsaturated polyester resin.

Description of Embodiments

The polyolefin resin expanded beads used according to the present invention contain multi-layer expanded beads containing a core layer containing a polyolefin resin and a cover layer coated on the core layer, in which the cover layer contains a mixed resin of a polyolefin resin (A) and at least one resin (B) selected from a polystyrene resin and a polyester resin, and the mixed resin has a weight ratio (A/B) of the polyolefin resin (A) and the resin (B) of from 15/85 to 90/10.

The polyolefin resin expanded beads (which may be hereinafter referred simply to as expanded beads) have a multi-layer structure containing a core layer in a foamed state and a cover layer.

The cover layer of the expanded beads is preferably a substantially non-foam resin layer. In the case where the cover layer of the expanded beads is foamed, there is a possibility that the mechanical strength of the expanded beads molded body obtained through in-mold molding of the expanded beads is decreased. The term "non-foam" referred herein encompasses not only one having completely no foam (including one that once has foam formed in the preparation of the expanded beads, but has no foam due to the breakage thereof), but also one having a slight amount of minute foam cells.

Resin of Cover Layer

The mixed resin constituting the cover layer of the multi-layer expanded beads will be described. The cover layer of the multi-layer expanded beads is constituted by a mixed resin of a polyolefin resin (A) and at least one resin (B) selected from a polystyrene resin and a polyester resin. In other words, the mixed resin constituting the cover layer is (i) a mixed resin of a polyolefin resin and a polystyrene resin, (ii) a mixed resin of a polyolefin resin and a polyester resin, or (iii) a mixed resin of a polyolefin resin, a polystyrene resin, and a polyester resin.

The weight ratio (A/B) of the polyolefin resin (A) and the resin (B) is necessarily from 15/85 to 90/10. In the cover layer, when the proportion of the polyolefin resin (A) is too small, the core layer and the cover layer may be released off from each other in the in-mold molding of the expanded beads due to the insufficient adhesion strength to the core layer, resulting in a possibility of failing to provide a favorable expanded beads molded body.

When the proportion of the resin (B) is too small, on the other hand, there is a possibility of deterioration of the properties, such as the bending elasticity, of the composite laminated body due to the poor adhesiveness to the thermosetting resin. In this point of view, the weight ratio (A/B) of the polyolefin resin (A) and the resin (B) in the mixed resin constituting the cover layer is preferably from 20/80 to 85/15, and more preferably from 30/70 to 80/20.

The weight ratio (A/B) of the polyolefin resin (A) and the resin (B) means the weight ratio of the polyolefin resin (A) and the polystyrene resin as the resin (B) in the case (i) above, the weight ratio of the polyolefin resin (A) and the polyester resin as the resin (B) in the case (ii) above, and the weight ratio of the polyolefin resin (A) and the total of the polystyrene resin and the polyester resin as the resin (B) in the case (iii) above.

Polyolefin Resin in Cover Layer

Examples of the polyolefin resin (A) constituting the cover layer include a polyethylene resin, a polypropylene resin, and a mixture of two or more kinds thereof.

Examples of the polyethylene resin include a polymer of ethylene monomer and a copolymer of ethylene and a comonomer that has a content of the ethylene component exceeding 50% by mol, such as high density polyethylene, low density polyethylene, linear low density polyethylene, and an ethylene-vinyl acetate copolymer, and a mixture of two or more kinds thereof.

Examples of the polypropylene resin include a polymer of propylene monomer, a propylene-ethylene copolymer, a propylene-butene copolymer, a propylene-ethylene-butene copolymer, and a mixture of two or more kinds thereof.

The polyolefin resin (A) constituting the mixed resin of the cover layer is preferably a resin of the same kind as the polyolefin resin constituting the core layer from the standpoint of the adhesiveness to the core layer.

Resin (B) selected from Polystyrene Resin and Polyester Resin of Cover Layer

The mixed resin constituting the cover layer contains at least one resin (B) selected from a polystyrene resin and a polyester resin. From the standpoint of the handleability, a polystyrene resin or a polyester resin is preferably used.

Polystyrene Resin of Cover Layer

Examples of the polystyrene resin constituting the cover layer include a polymer of a styrene monomer, a copolymer of a styrene monomer and an additional monomer, and a mixture of two or more kinds of these polymers. The proportion of the structural unit derived from the styrene monomer contained in the copolymer may be at least 50% by weight, preferably 60% by weight or more, and more preferably 80% by weight or more.

Specific examples of the styrene resin include polystyrene, rubber-modified polystyrene (impact resistant polystyrene), a styrene-acrylonitrile copolymer, a styrene-acrylic acid copolymer, a styrene-methacrylic acid copolymer, a styrene-methyl methacrylate copolymer, and a styrene-maleic anhydride copolymer. In the polystyrene resin, polystyrene is preferred due to the excellent processability and the excellent adhesiveness to the thermosetting resin thereof.

Polyester Resin of Cover Layer

Examples of the polyester resin constituting the cover layer include an aliphatic polyester resin and an aromatic polyester resin. The aliphatic polyester resin is a polyester that contains an aliphatic polycarboxylic acid component and an aliphatic polyhydric alcohol component, or a polyester that contains an aliphatic hydroxycarboxylic acid component, and examples thereof include polybutylene succinate, polybutylene adipate, and polylactic acid. The aromatic polyester is a polyester that contains an aromatic polybasic carboxylic acid and a polyhydric alcohol component, and examples thereof include polyethylene terephthalate, polypropylene terephthalate, polybutylene terephthalate, polycyclohexanedimethylene terephthalate, polyethylene naphthalate, and polybutylene naphthalate.

The polyester resin used in the cover layer is preferably an aliphatic polyester resin the excellent processability and the excellent adhesiveness to the thermosetting resin thereof, and is preferably a polylactic acid resin due to the excellent mechanical properties, such as the bending elasticity, thereof.

The polylactic acid resin used may be one containing a unit derived from lactic acid in an amount of 50% by mol or more in the resin. The polylactic acid resin encompasses, for example, (a) a polymer of lactic acid, (b) a copolymer of lactic acid and an additional aliphatic hydroxycarboxylic acid, (c) a copolymer of lactic acid, an aliphatic polyhydric alcohol and an aliphatic polybasic carboxylic acid, (d) a copolymer of lactic acid and an aliphatic polybasic carboxylic acid, (e) a copolymer of lactic acid and an aliphatic polyhydric alcohol, and (f) a mixture of a combination selected from (a) to (e). Specific examples of the lactic acid include L-lactic acid, D-lactic acid and DL-lactic acid, and also include L-lactide, D-lactide and DL-lactide, which are cyclic dimers thereof, and mixtures of these compounds.

Examples of the additional aliphatic hydroxycarboxylic acid in (b) include glycolic acid, hydroxybutyric acid, hydroxycaproic acid, and hydroxyheptanoic acid.

Examples of the aliphatic polyhydric alcohol in (c) and (e) include ethylene glycol, 1,4-butanediol, 1,6-hexanediol, 1,4-cyclohexanedimethanol, neopentyl glycol, decamethylene glycol, glycerin, trimethylolpropane, and pentaerythritol.

Examples of the aliphatic polybasic carboxylic acid in (c) and (d) include succinic acid, adipic acid, suberic acid, sebacic acid, dodecanedicarboxylic acid, succinic anhydride, adipic anhydride, trimesic acid, propanetricarboxylic acid, pyromellitic acid, and pyromellitic anhydride.

The molecular chain ends of the polylactic acid resin are preferably capped with at least one end-capping agent selected from a carbodiimide compound, an epoxy compound, an isocyanate compound and the like. When the molecular chain ends of the polylactic acid resin are capped, the reduction of the molecular weight of the polylactic acid resin due to hydrolysis may be suppressed.

The end-capping agent used may be, for example, a carbodiimide compound, an oxazoline compound, an isocyanate compound, an epoxy compound or the like. Among these, a carbodiimide compound is preferably used. Specific examples thereof include an aromatic monocarbodiimide, such as bis(dipropylphenyl)carbodiimide (e.g., Stabaxol 1-LF, produced by Rhein Chemie Rheinau GmbH), an aromatic polycarbodiimide (e.g., Stabxol P , produced by Rhein Chemie Rheinau GmbH, and Stabaxol P400, produced by Rhein Chemie Rheinau GmbH), and an aliphatic polycarbodiimide, such as poly(4,4'-dicyclohexylmethanecarbodiimide) (e.g., Carbodilite LA-1, produced by Nisshinbo Chemical Inc.). The end-capping agent may be used solely or as a combination of two or more kinds thereof. The content of the end- capping agent is preferably from 0.1 to 5 parts by weight, and more preferably from 0.5 to 3 parts by weight, per 100 parts by weight of the polylactic acid resin.

The polyester resin used in the mixed resin constituting the cover layer is preferably an amorphous polyester resin. The use of the amorphous resin is preferred since the resin is excellent in the fusibility among the expanded beads in the in-mold molding. The use of the amorphous polyester resin in the production of the composite laminated body of the present invention may facilitate the production of the composite laminated body that has a large adhesion strength between the expanded beads molded body and the thermosetting resin.

The amorphous polyester resin in the present invention means a resin that shows no endothermic peak associated with melting of the polyester resin in the DSC curve, which is obtained according to JIS K7121 (1987) with the case where the melting temperature is measured after performing a prescribed heat treatment (in which the heating rate and the cooling rate in conditioning a test piece are 10°C per minute respectively) by using a heat flux differential scanning calorimeter (which is hereinafter referred to as a DSC device) at a heating rate of 10°C per minute. Specifically, a polyester resin that has an endothermic calorific value of less than 5 J/g (including 0) is designated as the amorphous polyester resin. The endothermic calorific value is preferably less than 2 J/g (including 0).

Compatibilizing Agent

The mixed resin constituting the cover layer preferably contains a compatibilizing agent of the polyolefin resin (A) and the resin (B) selected from the polystyrene resin and the polyester resin. The use of the compatibilizing agent contained may enhance the adhesiveness between the expanded beads molded body and the thermosetting resin layer of the composite laminated body, so as to enhance the bending elasticity thereof. The content of the compatibilizing agent is preferably from 1 to 20 parts by weight, more preferably from 5 to 15 parts by weight, and further preferably from 7 to 13 parts by weight, per 100 parts by weight of the total amount of the polyolefin resin (A) and the resin (B) selected from the polystyrene resin and the polyester resin.

Examples of the compatibilizing agent include a compound that reduces the interface tension between the polyolefin resin (A) constituting the cover layer and the resin (B) selected from the polystyrene resin and the polyester resin constituting the cover layer, so as to enhance the adhesiveness therebetween. Examples of the compound include ethylene-propylene rubber; ethylene-propylene-diene rubber; a styrene thermoplastic elastomer, such as a styrene-diene block copolymer, and a hydrogenated block copolymer obtained by saturating at least a part of ethylenic double bonds of a styrene-diene block copolymer through hydrogenation; maleic acid-modified products of a polyolefin resin and these elastomers and rubber; and a graft polymer of these elastomers and rubber with an acrylic acid monomer. In the present invention, the compatibilizing agent may be used solely or as a combination of two or more kinds thereof.

Preferred examples of the styrene thermoplastic elastomer among the aforementioned styrene thermoplastic elastomers include one formed of (a) a styrene-diene block copolymer, and one formed of (b) a hydrogenated block copolymer obtained by saturating at least a part of ethylenic double bonds of a styrene-diene block copolymer through hydrogenation with an organic or inorganic metal compound catalyst.

Examples of the styrene-diene block copolymer (a) include a styrene-1,3-butadiene block copolymer (SBS), a styrene-1,3-pentadiene block copolymer, a styrene-isoprene block copolymer (SIS), styrene-(2,3-dimethyl-1,3-butadiene) block copolymer, a styrene-(3-methyl-1,3-octadiene) block copolymer, and a styrene-(4-ethyl-1,3-hexadiene) block copolymer. Examples of the hydrogenated block copolymer (b) include ones obtained through reduction reaction by hydrogenating at least a part of ethylenic double bonds of the styrene-diene block copolymer (a). Specific examples of the hydrogenated block copolymer (b) include a styrene-butadiene-butylene-styrene copolymer (SBBS) obtained by partially reducing double bonds of SBS, a styrene-ethylene-butylene-styrene copolymer (SEBS) obtained by completely reducing double bonds of SBS, and a styrene-ethylene-propylene-styrene copolymer (SEPS) obtained by reducing double bonds of SIS.

The cover layer may contain an additive, such as a lubricant, a catalyst neutralizing agent, and an antioxidant, depending on necessity in such a range that does not impair the objects of the present invention. The amount of the additive added may vary depending on the kind thereof and is preferably 15 parts by weight or less, more preferably 10 parts by weight or less, further preferably 5 parts by weight or less, and still further preferably 1 part by weight or less, per 100 parts by weight of the mixed resin.

Polyolefin Resin in Core Layer

The polyolefin resin used for constituting the core layer of the multi-layer expanded beads in the present invention may be the same one as the polyolefin resin (A) constituting the cover layer. In the polyolefin resin, a polymer of propylene monomer and an ethylene-propylene copolymer are preferred since they are excellent in balance between the solvent resistance and the mechanical properties, and the copolymer may be any of a block copolymer and a random copolymer.

The core layer of the multi-layer expanded beads used in the present invention may contain an additional thermoplastic resin in such a range that does not impair the objects of the present invention. Examples of the additional thermoplastic resin include a polystyrene resin, such as polystyrene, impact resistant polystyrene and a styrene-acrylonitrile copolymer, an acrylic resin, such as polymethyl methacrylate, and a polyester resin, such as polylactic acid and polyethylene terephthalate.

The amount of the additional thermoplastic resin is preferably 30 parts by weight or less, more preferably 20 parts by weight or less, and further preferably 10 parts by weight or less, per 100 parts by weight of the polyolefin resin constituting the core layer, from the standpoint of achieving both the solvent resistance and the mechanical properties, while the amount may vary depending on the kind thereof.

The polyolefin resin constituting the core layer preferably has a melting point (Tc) of from 100 to 200°C, more preferably from 110 to 190°C, and further preferably from 130 to 170°C, from the standpoint of achieving both the hot workability in the in-mold molding and the heat resistance.

The core layer may contain an additive, such as a catalyst neutralizing agent, a lubricant, a foam nucleating agent, and a crystal nucleating agent. The amounts thereof are preferably as small as possible within such ranges that do not impair the objects of the present invention. The amount of the additive added is preferably 15 parts by weight or less, more preferably 10 parts by weight or less, further preferably 5 parts by weight or less, and particularly preferably 1 part by weight or less, per 100 parts by weight of the polyolefin resin constituting the core layer, while the amounts depend on the kind and the intended purpose of the additive.

From the standpoint of providing the expanded beads that have good fusibility among the expanded beads, in the case where the polyolefin resin (A) constituting the mixed resin of the cover layer is a crystalline resin, the melting point (Ts) of the polyolefin resin (A) of the cover layer is preferably lower than the melting point (Tc) of the polyolefin resin of the core layer. When the melting point of the cover layer is relatively low, the fusion of the expanded beads may be facilitated in the in-mold molding.

In this point of view, the difference in melting point (Tc-Ts) between the melting point of the polyolefin resin (A) constituting the mixed resin of the cover layer and the melting point of the polyolefin resin constituting the core layer is more preferably from 5 to 30°C, and further preferably from 10 to 25°C.

The melting points of the core layer and the polyolefin resin (A) constituting the cover layer used herein are values obtained by a heat flux differential scanning calorimetry (DSC method) according to JIS K7122 (1987). Specifically, from 2 to 4 mg of the polyolefin resin used as the raw material is collected, and heated from room temperature (10 to 40°C) to 220°C at a rate of 10°C per minute with a heat flux differential scanning calorimeter, and again heated therewith from 40°C to 220°C at a rate of 10°C per minute as the second heating. The peak temperature of the DSC endothermic curve obtained in the second heating is designated as the melting point. In the case where the endothermic curve has two or more peaks, the peak temperature of the peak in the endothermic curve that has the largest peak intensity is designated as the melting point.

In the case where the polyolefin resin (A) constituting the mixed resin of the cover layer is a resin that shows no melting point, the Vicat softening point of the polyolefin resin (A) constituting the cover layer is preferably lower than the melting point of the polyolefin resin constituting the core layer.

The difference in temperature between the softening point of the polyolefin resin (A) constituting the mixed resin of the cover layer and the melting point of the polyolefin resin constituting the core layer is preferably from 5 to 30°C, and more preferably from 10 to 25°C.

In the description herein, the Vicat softening point is measured according to JIS K7206 (1999) by the A50 method.

In the multi-layer expanded beads used according to the present invention, the weight ratio of the resin forming the core layer and the resin forming the cover layer is preferably from 99.5/0.5 to 70/30, and more preferably from 95/5 to 80/20. When the weight ratio of the resin forming the core layer of the multi-layer expanded beads (i.e., the core layer portion of the expanded beads) and the resin forming the cover layer (i.e., the cover layer portion of the expanded beads) is in the range, the fusing strength among the expanded beads may be large without bubbles present in the vicinity of the fusion interface among the expanded beads, and thereby an expanded beads molded body having an excellent mechanical strength may be obtained.

Production Method of Multi-layer Expanded Beads

The multi-layer expanded beads containing the core layer and the cover layer used according to the present invention may be obtained by foaming multi-layer resin beads. The multi-layer resin beads may be produced by a known method, such as a co-extrusion method described in JP-B-41-16125, JP-B-43-23858, JP-B-44-29522, JP-A-60-185816 and the like. In general, for producing the multi-layer resin beads, an extruder for producing the core layer and an extruder for producing the cover layer are used and connected to a co-extrusion die. The necessary resin component and, depending on necessity, an additive are heated and kneaded in the extruder for forming the core layer, whereas the necessary resin component and, depending on necessity, an additive are heated and kneaded in the extruder for forming the cover layer. The molten mixtures are joined in the die to form a multi-layer structure containing a core layer in a cylindrical shape and a cover layer coated on the side surface of the core layer, and the multi-layer structure is extruded into a strand form through the die outlet in the form of a fine pore, and cut with a pelletizer to make resin beads having a prescribed weight, thereby providing the multi-layer resin beads.

Examples of the shape of the multi-layer resin beads include a cylindrical shape, a rugby ball shape, and a spherical shape.

The average weight per one of the multi-layer resin beads is preferably from 0.01 to 10.0 mg, and particularly preferably from 0.1 to 5.0 mg. The average weight of the expanded beads may be controlled by conforming the average weight per one of the resin beads for providing the expanded beads to the average weight per one of the target expanded beads. When the average weight per one of the expanded beads is too small, the foaming efficiency may be deteriorated, and therefore the average weight per one of the expanded beads is preferably from 0.01 to 10.0 mg, and particularly preferably from 0.1 to 5.0 mg.

The multi-layer expanded beads used according to the present invention may be produced by foaming the multi-layer resin beads. Specifically, for example, the multi-layer resin beads containing the core layer and the cover layer are dispersed in an aqueous medium (which is generally water) in a pressurizable airtight vessel (e.g., an autoclave), to which a dispersant may be added depending on necessity, and a prescribed amount of a foaming agent is added, and the mixture is agitated under heating to impregnate the resin beads with the foaming agent. Thereafter, the core layer is foamed by discharging the contents along with the aqueous medium from the interior of the vessel to an area under a lower pressure (atmospheric pressure) than the inner pressure of the vessel, and thereby the multi-layer expanded beads are produced (this method may be hereinafter referred to as a dispersion medium discharging foaming method). In the discharging, the aqueous medium, the dispersant and the multi-layer resin beads are preferably discharged by applying a back pressure to the interior of the vessel.

In the present invention, a physical foaming agent may be used, and while not limiting, examples thereof used include an organic physical foaming agent, such as an aliphatic hydrocarbon compound, e.g., n-butane, i-butane, n-pentane, i-pentane and n-hexane, and a halogenated hydrocarbon compound, e.g., trichlorofluoromethane, dichlorofluoromethane, tetrachlorodifluoroethane and dichloroethane, an inorganic physical foaming agent, such as carbon dioxide, nitrogen, air and water, which may be used solely or as a mixture of two or more kinds thereof. Among the foaming agents, a foaming agent containing as a major component an inorganic physical foaming agent, such as carbon dioxide, nitrogen, air and water, is preferably used, and carbon dioxide is more preferably used.

The amount of the physical foaming agent added may be appropriately selected depending on the kind of the polyolefin resin, the kind of the foaming agent, the apparent density of the target expanded beads (foaming magnification), and the like. For example, in the case where carbon dioxide is used as the physical foaming agent, the foaming agent may be used in an amount of from 0.1 to 15 parts by weight, preferably from 0.5 to 12 parts by weight, and more preferably from 1 to 10 parts by weight, per 100 parts by weight of the polyolefin resin constituting the core layer.

Examples of the dispersant include an inorganic substance that is difficultly soluble in water, such as aluminum oxide, calcium tertiary phosphate, magnesium pyrophosphate, zinc oxide, kaolin and mica, and a water soluble polymer protective colloid agent, such as polyvinylpyrrolidone, polyvinyl alcohol and methyl cellulose. Furthermore, an anionic surfactant, such as sodium dodecylbenzenesulfonate and sodium alkanesulfonate, may also be used as the dispersant.

For providing the expanded beads having a particularly high foaming magnification, the expanded beads obtained in the aforementioned method are charged in a pressurizable airtight vessel, and an operation of increasing the inner pressure of the expanded beads is performed by pressurizing the vessel with an inert gas, such as air. Thereafter, the expanded beads are taken out from the vessel and heated with steam or hot air, thereby providing expanded beads having a high foaming magnification. This method is referred to as a two-step foaming method.

In the dispersion medium discharging foaming method, the specific controlling method of the high temperature peak described later is preferably such a method that on dispersing the multi-layer resin beads in the aqueous medium and heating them, the temperature is increased not to reach the melting end temperature (Tce) of the polyolefin resin of the core layer or more, and terminated at an arbitrary temperature (Ta) that is within the range of from the temperature that is lower by 20°C or more than the melting point (Tc) of the resin to the temperature that is less than the melting end temperature (Tce), the temperature is retained at the temperature (Ta) for a sufficient period of time, which is preferably approximately from 10 to 60 minutes, thereafter the temperature is increased to an arbitrary temperature (Tb) that is within the range of from the temperature that is lower by 15°C than the melting point (Tc) to the temperature of (melting end temperature (Tce) + 10°C), and terminated at that temperature, the temperature is retained at that temperature for a sufficient period of time, which is preferably approximately from 10 to 60 minutes, and then the multi-layer resin beads are discharged from the interior of the airtight vessel to the area under a low pressure.

In the dispersion medium discharging foaming method, the reason why the temperatures Ta and Tb and the retention times are designated as shown above is that the extent of the high temperature peak of the expanded beads depends mainly on the temperature Ta and the retention time at that temperature, the temperature Tb and the retention time at that temperature, and the temperature increasing rates in the production of the expanded beads.

In general, the calorific value of the high temperature peak of the expanded beads tends to be increased when the temperatures Ta and Tb are lower within the aforementioned temperature range and when the retention time is longer. The temperature increasing rate generally employed in the foaming step is from 0.5 to 5°C per minute. By repeating preliminary experiments taking these factors into consideration, the production conditions for the expanded beads having a prescribed high temperature peak calorific value can be easily and precisely determined.

The temperature controlling range on foaming the resin beads described above is a temperature range that is suitable for the case where an inorganic physical foaming agent is used as the foaming agent. In the case where an organic physical foaming agent is used in combination, the suitable temperature range tends to be shifted from the aforementioned temperature range to the low temperature side, depending on the kind and the amount of the organic physical foaming agent used.

The expanded beads used according to the present invention have a multi-layer structure containing a core layer portion in a foamed state, having formed on the surface thereof a cover layer that is in a substantially non-foamed state. The foamed beads preferably have an apparent density of from 18 to 200 g/L from the standpoint of the physical properties of the expanded beads molded body and the like, and more preferably from 25 to 80 g/L.

The apparent density of the expanded beads may be measured in the following manner. The expanded beads of weight W (g) are immersed with a metallic mesh or the like in a measuring cylinder having water charged therein, and the volume V (L) of the expanded beads is obtained from the elevation of the water level. The value (W/V) obtained by dividing the weight of the expanded beads by the volume of the expanded beads is converted to the unit g/L and is designated as the apparent density.

The average foam cell diameter of the expanded beads used according to the present invention is preferably from 50 to 500 μm from the standpoint of the secondary foaming property and the die transfer property of the expanded beads, and the like. The average foam cell diameter is more preferably 60 μm or more, further preferably 70 μm or more, and particularly preferably 80 μm or more. The upper limit thereof is more preferably 300 μm or less, further preferably 250 μm or less, and particularly 200 μm or less, from the standpoint of the strength against a compression stress and the external smoothness of the resulting foam molded body, and the like.

In the measurement of the average foam cell diameter of the expanded beads, the cross section of the expanded bead divided into two equal parts is photographed under a microscope by enlarging the cross section to make the entire cross section within the view field. On the micrograph thus photographed, a straight line is drawn to divide the cross section into approximately two equal parts, and the value obtained by dividing the length of the straight line by the number of all the foam cells that are in contact with the straight line is designated as the average foam cell diameter of the expanded bead. The same measurement is performed for 20 expanded beads, and the arithmetic average value thereof is designated as the average foam cell diameter of the expanded beads.

The closed cell ratio of the expanded beads used in the present invention is preferably 80% or more. When the closed cell ratio is in the range, the expanded beads may have excellent secondary foaming property, and the expanded beads molded body obtained may have excellent mechanical properties, such as bending elasticity. In this point of view, the closed cell ratio of the expanded bead is more preferably 85% or more, and further preferably 90% or more.

The closed cell ratio of the expanded beads may be measured in the following manner. The expanded beads are aged under the atmospheric pressure in a thermostat chamber under the conditions of 23°C and 50%RH for 10 days. In the thermostat chamber, the aged expanded beads in a bulk volume of approximately 20 cm$^3$ are used as a specimen and measured precisely for the apparent volume Va by the water sink test shown below. The measurement specimen thus having been measured for the apparent volume Va is sufficiently dried, and then measured for the true volume Vx of the measurement specimen with an air comparison pycnometer 930, produced by Toshiba Beckman Co., Ltd. according to the procedure C in ASTM D2856-70. The closed cell ratio is calculated based on the volumes Va and Vx according to the following expression (1), and the average value of N = 5 is designated as the closed cell ratio of the expanded beads.

$$\text{Closed cell ratio (\%)} = (Vx\text{-}W/\rho)\times100/(Va\text{-}W/\rho) \tag{1}$$

wherein

Vx represents the true volume of the expanded beads measured by the aforementioned method, i.e., the sum (cm$^3$) of the volume of the resin constituting the expanded beads and the total volume of the foam cells of the closed cells in the expanded beads;
Va represents the apparent volume (cm$^3$) of the expanded beads measured from the elevation of the water level on immersing the expanded beads in the measuring cylinder having water charged therein;
W represents the weight (g) of the measurement specimen of the expanded beads; and
p represents the density (g/cm$^3$) of the resin constituting the expanded beads.

Production Method of Expanded beads molded Body

The expanded beads molded body obtained through in-mold molding of the above-described expanded beads may be produced by a known in-mold molding method.

For example, the expanded beads molded body may be formed by a method using a depressurization molding method, in which by using a pair of ordinary molds for in-mold molding of expanded beads, the expanded beads are charged in the cavity of the molds under the atmospheric pressure or reduced pressure, and compressed by closing the molds to reduce the volume to 5 to 70% of the volume of the cavity of the molds, and then the expanded beads are heated by supplying a heat medium, such as steam, to the interior of the molds, so as to fuse the expanded beads thermally (see, for example, JP-B-46-38359). As an alternative method, the expanded beads molded body may be formed, for example, by a compression molding method, in which the expanded beads are subjected to a pressurizing treatment with a pressurizing gas, such as air, in advance to increase the pressure in the expanded beads, enhancing the secondary foaming property of the expanded beads, then the expanded beads are charged in the cavity of the molds, followed by closing the molds, while maintaining the secondary foaming property thereof, and subsequently a heat medium, such as steam, is supplied to the interior of the molds, so as to fuse the expanded beads thermally (see, for example, JP-B-51-22951).

The expanded beads molded body may also be formed by a compression charge molding method, in which in a cavity having been pressurized to a pressure higher than the atmospheric pressure with a compression gas, the expanded beads having been pressurized to a pressure higher than that pressure are charged, and then a heat medium, such as steam, is supplied to the cavity, so as to fuse the expanded beads thermally (see, for example, JP-B-4-46217). In alternative, the expanded beads molded body may be formed by an atmospheric charge molding method, in which the expanded beads having high secondary foaming property are charged in a cavity of a pair of molds under the atmospheric pressure or reduced pressure, and then a heat medium, such as steam, is supplied to the cavity, so as to fuse the expanded beads thermally (see, for example, JP-B-6-49795), or a method combining the aforementioned methods (see, for example, JP-B-6-22919).

The bulk density of the expanded beads molded body obtained through in-mold molding of the expanded beads of the present invention may be arbitrarily determined depending on the purpose, and is preferably in a range of from 15 to 200 g/L, more preferably from 20 to 100 g/L, and particularly preferably from 30 to 80 g/L, from the standpoint of the lightweight property.

The bulk density of the expanded beads molded body may be calculated by dividing the weight (g) of a test piece cut out from the molded body by the volume (L) of the test piece obtained from the external dimension thereof.

Production Method of Composite Laminated Body

The composite laminated body of the present invention comprising the expanded beads molded body obtained through in-mold foaming of the above-described multi-layer expanded beads, having laminated on the surface thereof a thermosetting resin layer which contains a fibrous material. The thermosetting resin layer may be laminated to cover completely the surface of the expanded beads molded body, may be laminated to expose a part of the surface of the expanded beads molded body, or may be laminated on one surface of the expanded beads molded body.

Thermosetting Resin

Examples of the thermosetting resin constituting the thermosetting resin layer of the composite laminated body of the present invention include an unsaturated polyester resin, an epoxy resin, a phenol resin, a polyamide resin, a urea resin, a melamine resin, a polyimide resin, and a diallyl phthalate resin. Among these, the thermosetting resin layer is preferably constituted by an unsaturated polyester resin, and particularly preferably constituted by an unsaturated polyester and a crosslinkable monomer, from the standpoint of the excellent adhesiveness to the expanded beads molded body of the present invention.

Examples of the unsaturated polyester include ones obtained through esterification reaction of an $\alpha,\beta$-unsaturated dibasic acid or an anhydride thereof, such as maleic acid, maleic anhydride and fumaric acid, a saturated dibasic acid or an anhydride thereof, such as phthalic acid, phthalic anhydride, isophthalic acid, terephthalic acid, adipic acid, sebacic acid, tetraphthalic anhydride and endo-methylene tetrahydrophthalic acid, and a polyhydric alcohol, such as ethylene glycol, propylene glycol, diethylene glycol, 1,3-butanediol, 1,4-butanediol, 1,5-pentanediol, 1,6-hexanediol, neopentyl glycol, hydrogenated bisphenol A, a propylene oxide adduct of bisphenol A, glycerin, trimethylolpropane, ethylene oxide and propylene oxide. Dicyclopentadiene and a maleic acid adduct of cyclopentadiene may be used as an alternative material of some of the raw materials shown above. From the standpoint of the environmental friendliness, an unsaturated polyester using a thermosetting resin that uses, as raw materials, glycolic acid or a carboxylic acid that is derived from inedible vegetables and fumaric acid or maleic acid derived from petroleum (Biomup, a trade name, produced by U-Pica Co., Ltd.) is preferably used.

Examples of the crosslinkable monomer include a vinyl monomer and a vinyl oligomer capable of being crosslinked with the unsaturated polyester, for example, a vinyl compound, such as styrene, vinyltoluene, $\alpha$-methylstyrene, chlorostyrene, dichlorostyrene, vinylnaphthalene, ethyl vinyl ether, methyl vinyl ketone, methyl acrylate, ethyl acrylate, methyl methacrylate, acrylonitrile and methacrylonitrile, and an allyl compound, such as diallyl phthalate, diallyl fumarate, diallyl succinate and triallyl cyanurate, which may be used solely or as a combination thereof, and styrene is generally used.

The unsaturated polyester may be dissolved in the crosslinkable monomer and may be used as an unsaturated polyester resin. The unsaturated polyester resin may contain a fibrous material depending on necessity, and is laminated on the surface of the expanded beads molded body and cured, so as to become the thermosetting resin layer adhered and laminated on the surface of the expanded beads molded body.

The unsaturated polyester resin may contain a filler, a curing agent, a releasing agent, a shrinkage preventing agent, and a thickening agent depending on necessity to form an unsaturated polyester resin composition.

The unsaturated polyester resin composition may contain a pigment, a viscosity reducing agent, a defoaming agent and the like depending on necessity.

The curing method of the thermosetting resin liquid raw material is not particularly limited as described above. The measure for curing is also not particularly limited as far as the target cured product can be obtained, and the curing may be performed by measures associated with ordinary chemical reaction, such as radical reaction, polycondensation reaction and metathesis reaction.

The thermosetting resin cured product preferably has a surface hardness of 20 or more in terms of Barcol hardness. The Barcol hardness may be measured according to JIS K7060 (1995).

The thermosetting resin layer contains a fibrous material. As the thermosetting resin layer, one containing a fibrous material, i.e., one referred to as fiber-reinforced plastics (FRP) or a prepreg, has been known. The thermosetting resin layer containing a fibrous material is enhanced in the strength, particularly the bending strength, so as to have excellent durability, irrespective of the lightweight property thereof. The case where a fibrous material is contained encompasses, in addition to the aforementioned case where the fibrous material in a fibrous state is added to the thermosetting resin, a case where the thermosetting resin layer contains a woven material of the fibers, such as a glass fiber cloth and a carbon fiber cloth, a material obtained by paper making or binding with a binder the fibers, such as a glass fiber mat and a carbon fiber mat, a nonwoven fabric of the fibers, such as a needle punched mat, or a knitted fabric thereof, such as a cheesecloth. Furthermore, a mat of metallic fibers, a net-like product formed of fine wire, and the like may also be used. The fibrous material also has a function of reducing the dimensional change of the thermosetting resin on curing.

Examples of the fibrous material include glass fibers, carbon fibers, vinylon fibers, polyester fibers, aromatic polyamide fibers, and phenol fibers, and glass fibers are generally used. Furthermore, natural fibers, such as bamboo fibers, kenaf, linen, jute, sisal, ramie, and curaua, may also be used. The fiber length is generally preferably from 3 to 50 mm, and more preferably from 6 to 25 mm. The content of the fibrous material is generally from 0 to 60% by weight, and preferably from 5 to 40% by weight, in the thermosetting resin layer.

On forming the thermosetting resin layer laminated and adhered to the surface of the polyolefin resin expanded beads molded body, a known molding method may be employed, such as hand lay-up molding, resin transfer molding (RTM), sheet molding compound molding (SMC), and bulk molding compound molding (BMC).

As described in detail above, in the case where the polyolefin resin expanded beads are subjected to in-mold molding to form an expanded beads molded body, and the thermosetting resin layer is formed on the surface of the expanded beads molded body, the expanded beads can form the surface of the expanded beads molded body that is excellent in adhesiveness to the thermosetting resin composition while retaining the excellent characteristics, such as the excellent solvent resistance, of the expanded beads containing a polyolefin resin as the base resin. Accordingly, the molded body of the polyolefin resin expanded beads is suitable for a core material of a composite laminated body of the present invention containing a foam body and a thermosetting resin layer laminated and adhered to the surface thereof.

The composite laminated body of the present invention can be applied to the known purposes of FRP, such as a bathtub, a water tank, a swimming pool, a temporary lavatory, a chair, a waterproof pan, a vehicle panel, a vehicle body, a ship body, a float, a surfboard, a snowboard, and a helmet, and is also expected to be applied to the development of new purposes, such as a vehicle door panel and a chassis for a solar thermal power generation device.

Examples

The present invention will be described in more detail with reference to examples below, but the present invention is not limited to the examples.

The properties and evaluations of the expanded beads were measured in the following manners. The apparent density, the closed cell ratio, and the average foam cell diameter of the expanded beads were measured by the methods described in the description herein.

Endothermic Calorific Values of High Temperature Peak of Expanded Beads

The endothermic calorific values of the high temperature peak of the expanded beads were measured by the method described in the description herein, and the calorific value of the high temperature peak and the total heat of fusion of expanded beads were obtained. The measuring apparatus used was DSC Q1000, produced by TA Instruments, Inc.

Methods for Measurement and Evaluation of Properties of Expanded Beads Molded Body

The properties and evaluations of the expanded beads molded body obtained through in-mold molding of the resulting expanded beads were measured in the following manners.

Bulk Density of Expanded Beads Molded Body

The bulk density (g/L) of the expanded beads molded body was obtained in the following manner. The bulk volume thereof was obtained from the external dimension of the expanded beads molded body having been allowed to stand under an environment of a temperature of 23°C and a relative humidity of 50% for 24 hours or more. Subsequently, the weight (g) of the expanded beads molded body was precisely measured. The bulk density was obtained by dividing the weight of the expanded beads molded body by the bulk volume thereof, followed by converting the unit.

Fusion Ratio of Expanded Beads Molded Body

The fusion ratio of the expanded beads molded body was based on the ratio of the number of the expanded beads that underwent material failure (fusion ratio) among the expanded beads that were exposed on the fracture surface on fracturing the expanded beads molded body. Specifically, the expanded beads molded body was cut with a cutter knife to a depth of approximately 10 mm in the thickness direction of the expanded beads molded body, and the expanded beads molded body was fractured from the cut portion. Subsequently, the number (n) of the expanded beads present on the fracture surface and the number (b) of the expanded beads that underwent material failure were measured, and the ratio (b/n) of (b) and (n) in terms of percentage was designated as the fusion ratio (%).

Bending Elasticity of Expanded Beads Molded Body

The bending elasticity was measured according to the measurement method described in JIS K7221-1 (2006). The bending elasticity was measured in the following manner. A test piece having a dimension of 20 mm in thickness × 25 mm in width × 120 mm in length having both surfaces that were cut surfaces, on which the cross sections of foam cells were exposed, was allowed to stand in a thermostat chamber at room temperature of 23°C and a humidity of 50% for 24 hours or more, and then measured with a testing machine, Autograph AGS-10kNX (produced by Shimadzu Corporation), under conditions of a supporting point distance of 100 mm, a radius of the indenter $R_1$ of 5.0 mm, a radius of the pedestal $R_2$ of 5.0 mm, a test speed of 10 mm/min, a room temperature of 23°C, and a humidity of 50%. The average value of the calculated values (5 points or more) was used.

Compression Permanent Strain of Expanded Beads Molded Body

A test piece having a dimension of 50 mm in length × 50 mm in width × 20 mm in thickness was cut out from the expanded beads molded body, and the test piece was measured for the compression permanent strain according to JIS K6767 (1999).

Methods for Measurement and Evaluation of Properties of Composite Laminated Body

The properties and evaluations of the composite laminated body obtained by laminating and adhering the thermosetting resin layer were measured in the following manners. The density of the composite laminated body was obtained in the same manner as in the measurement of the bulk density of the expanded beads molded body.

Adhesiveness between Thermosetting Resin Layer and Expanded beads Molded Body

In the composite laminated body having been completed for the lamination and curing, the expanded beads molded body and the thermosetting resin layer were torn from each other at the interface therebetween, and a specimen having the expanded beads molded body that underwent material failure on tearing was evaluated as A, whereas a specimen having the expanded beads molded body that did not undergo material failure but was torn at the interface was evaluated as B.

Shape Retaining Property of Expanded Beads Molded Body

In the shape of the expanded beads molded body of the composite laminated body having been completed for the lamination and curing, a case where there was no change from the state before the lamination was evaluated as A, whereas a case where dissolution, or thickness reduction or defect due to melting was found was evaluated as B.

Bending Elasticity of Composite Laminated Body

The bending elasticity of the composite laminated body was measured according to the measurement method described in JIS K7221-1 (2006) in the same manner as the bending strength of the molded body except that a test piece (20 mm in thickness × 25 mm in width × 120 mm in length) was produced to form the thermosetting resin layers of approximately 0.7 mm on both upper and lower surfaces in the thickness direction of the expanded beads molded body.
The value obtained by dividing the bending elasticity by the bulk density of the composite laminated body is used for considering the difference in foaming magnification of the expanded beads molded body, and the larger the value means the higher the bending elasticity.

Preparation of Mixed Resins Sa1 to Sa6 for Cover Layer

An ethylene-propylene random copolymer (ethylene content: 3.5% by weight, melting point: 125°C, MFR (230°C, 2.16 kgf): 7 g per 10 min), which was a polypropylene resin shown as PP2 in Table 1, as the polyolefin resin (A), a polyester resin, which was an amorphous polylactic acid resin, produced by Nature Works LLC (4060D, a trade name, endothermic quantity: 0 J/g, Vicat softening point: 58°C, D-body content: 11.8% by weight, MFR (190°C, 2.16 kgf): 4.4 g per 10 min) shown as PES1 in Table 1, as the resin (B), bis(dipropylphenyl)carbodiimide, produced by Rhein Chemie Rheinau GmbH (Stabaxol 1-LF, a trade name) as the end capping agent, and a styrene elastomer, produced by JSR Corporation, (SBS, TR2250, a trade name, styrene/rubber ratio: 52/48, MFR (190°C, 2.16 kgf): 0.7 g per 10 min) shown as CA1 in Table 1 as the compatibilizing agent were supplied in the mixing ratios shown in Table 1 to a twin screw extruder having an inner diameter of 30 mm, and the materials were kneaded at 190 to 220°C and extruded into a strand form, which was cooled and then cut to prepare mixed resins Sa1 to Sa6 for the cover layer.

Preparation of Mixed Resin Sb for Cover Layer

A mixed resin Sb for the cover layer was prepared in the same manner as in the preparation of the mixed resins Sa for the cover layer except that a polystyrene resin, produced by PS Japan Corporation (GPPS, grade: HF77, glass transition temperature: 97°C, MFR (200°C, 5 kgf): 7.5 g per 10 min) shown as PS1 in Table 1 was used in the mixing ratio shown in Table 1 as the resin (B), instead of the polyester resin.

Examples 1 to 7

Production of Polyolefin Resin Expanded Beads (not claimed)

Production of Multi-Layer Resin beads (not claimed)

The extruder used had an extruder having an inner diameter of 65 mm for forming the core layer and an extruder having an inner diameter of 30 mm for forming the cover layer (outer layer) and was capable of co-extruding a large number of multi-layer strands from the outlet thereof.

The ethylene-propylene random copolymer (ethylene content: 2.8%, melting point: 143°C, MFR (230°C, 2.16 kgf): 5.1 g per 10 min) shown as PP1 in Table 1 was supplied as the polyolefin resin to the extruder for forming the core layer, and the mixed resin Sa1 to Sa6 or Sb was supplied to the extruder for forming the cover layer, which were then melt-kneaded respectively.

The melt-kneaded products were joined in the die at a weight ratio (core layer)/(cover layer) of 85/15, and were co-extruded from the fine pore attached to the tip end of the extruder into multi-layer strands having a circular cross section containing the core layer and the cover layer covering the outer surface of the core layer. The strands thus co-extruded was cooled with water, and then cut with a pelletizer to a weight of approximately 1.5 mg per one particle, followed by drying, so as to provide multi-layer resin beads.

The polyolefin resin of the core layer contained zinc borate as a foam stabilizer in a content of 1,000 ppm by weight, which was added in the form of a master batch.

Production of Expanded Beads (not claimed)

Expanded beads were then produced by using the multi-layer resin beads.

1 kg of the multi-layer resin beads obtained above and 3 L of water as a dispersion medium were charged in a 5 L airtight vessel equipped with an agitator. To the dispersion medium, per 100 parts by weight of the multi-layer resin beads, 0.3 part by weight of kaolin as a dispersant, 0.004 part by weight in terms of effective ingredient of a surfactant (Neogen S-20F, a trade name, produced by Dai-ichi Kogyo Seiyaku Co., Ltd., sodium alkylbenzenesulfonate), and the amounts shown in Table 1 of carbon dioxide in the form of dry ice were added as a foaming agent.

Subsequently, the mixture was heated under agitation to a temperature that was lower by 5°C than the foaming temperature shown in Table 1, and was retained at that temperature for 15 minutes. Thereafter, the mixture was heated to the foaming temperature of each of the examples, and retained at that temperature for 15 minutes.

Thereafter, the content was discharged to the atmospheric pressure under application of backpressure with carbon dioxide, and thus polyolefin resin expanded beads having the apparent density shown in Table 1 were obtained.

Production of Polyolefin Resin Expanded Beads Molded Body (not claimed)

An expanded beads molded body was produced by using the polyolefin resin expanded beads obtained above.

Into a pressure vessel having the expanded beads housed therein, compressed air was pressed to provide expanded beads having a particle inner pressure of 0.10 MPa (G), and the expanded beads were charged in a flat plate mold with a dimension of 200 mm in length × 250 mm in width × 20 mm in thickness, and subjected to in-mold molding by compression molding with steam heating, so as to provide an expanded beads molded body in the form of a plate. The heating method was that steam was supplied for 5 seconds in the state where the drain valves on both surfaces were opened for preheating (exhausting step), then heating was performed from one side at a pressure that was lower by 0.04 MPa (G) than the final heating pressure, then heating was performed from the other side at a pressure that was lower by 0.02 MPa (G) than the final heating pressure, and then heating was performed at the molding steam pressure of 0.22 MPa (G) shown in Table 1.

After completing the heating, the pressure was released, the molded body was cooled with water until the surface pressure due to the foaming force of the molded article was reduced to 0.04 MPa (G), and then the molded body was taken out by opening the molds. The resulting molded body was aged in an oven at 80°C for 12 hours, and then slowly cooled to provide an expanded beads molded body. The properties of the resulting molded body are shown in Table 1. Thus, an expanded beads molded body having a thickness of 20 mm was obtained.

Production of Composite Laminated Body (according to the invention)

A fiber-reinforced unsaturated polyester resin composition was laminated and adhered to the surface of the expanded beads molded body, thereby forming a thermosetting resin layer in the following manner.

A flat plate (350 × 350 × 5 mm in thickness, mirror finished) formed of stainless steel having a releasing agent coated on the surface thereof was prepared.

(1) Percure AH (acetylacetone peroxide), produced by NOF Corporation, as a curing agent, and U-Pica PR-M, produced by U-Pica Co., Ltd., as a curing assistant, were added to an unsaturated polyester, U-Pica 4007A, produced by U-Pica Co., Ltd. The resulting unsaturated polyester resin was coated on the stainless steel flat plate by a hand lay-up method.

(2) A glass fiber mat having a dimension of 200 mm × 250 mm (basis weight: 300 g/m$^2$) was then placed on the surface having the unsaturated polyester resin coated thereon.

(3) The same unsaturated polyester resin having the curing agent added thereto as above was further coated thereon by a hand lay-up method for impregnating the glass fiber mat therewith.

Immediately thereafter, the polypropylene resin expanded beads molded body (200 mm × 250 mm × 20 mm) obtained in Examples 1 to 7 was placed thereon with the surface of 200 mm × 250 mm directed thereto.

(4) Subsequently, the same unsaturated polyester resin having the curing agent added thereto as above was coated on the upper surface of the expanded beads molded body (i.e., the surface having no unsaturated polyester resin coated) by a hand lay-up method.

(5) The fiber mat was further placed thereon in the same manner as in the item (2).

(6) The same unsaturated polyester resin having the curing agent added thereto as the item (3) was further coated thereon by a hand lay-up method for impregnating the fiber mat therewith.

(7) Immediately thereafter, a stainless steel flat plate (weight: 5 kg) having a releasing agent coated on the surface thereof was placed thereon, a weight of 5 kg was further placed thereon, and the unsaturated polyester resin was reacted and cured by allowing to stand at ordinary temperature for 1 hour and then further allowing to stand at 60°C for 3 hours. After completing the curing reaction, the stainless steel flat plates were released to provide a composite laminated body (FRP laminated body) containing the glass fiber-reinforced unsaturated polyester resin cured product (FRP), the expanded beads molded body, and the glass fiber-reinforced unsaturated polyester resin cured product (FRP). The glass fiber-reinforced unsaturated polyester resin cured product was prepared to have a content of the glass fibers therein of 30% by weight.

The compositions, the constitutions, the properties, the evaluation results and the like of the resin beads, the expanded beads, the expanded beads molded bodies, and the composite laminated bodies of Examples 1 to 7 are shown in Table 1.

Comparative Example 1

Zinc borate as a foam modifier was added to the same polypropylene resin shown as PP1 in Table 1 as in Example 1 to a content of 1,000 ppm by weight. Thereafter, the resin was supplied to an extruder having an inner diameter of 65 mm for forming the core layer, extruded into a strand form, cooled with water, cut with a pelletizer to a weight of approximately 1.5 mg, and dried, so as to provide single layer resin beads.

By using the polypropylene resin beads of Comparative Example 1, expanded beads having no cover layer were obtained under the conditions shown in Table 1, an expanded beads molded body having a thickness of 20 mm was obtained, and a composite laminated body containing the expanded beads molded body having on both surfaces thereof a thermosetting resin layer was obtained in the same manner as in Examples.

The laminated composite body was inferior in adhesiveness since the polyolefin resin expanded beads having no cover layer were subjected to in-mold molding and adhered to the thermosetting resin.

The compositions, the constitutions, the properties, the evaluation results and the like of the resin beads, the expanded beads, the expanded beads molded body, and the composite laminated body of Comparative Example 1 are shown in Table 1.

Comparative Example 2

An expanded beads molded body was obtained by using polystyrene resin expanded beads having an average particle diameter of 2 mm formed of a polystyrene resin shown as PS2 in Table 1 (produced by JSP Corporation, grade: EPSJQ250NX, glass transition temperature: 105°C) with a mold having a dimension of 200 mm in length × 250 mm in width × 20 mm in thickness under a molding steam pressure of 0.07 MPa (G).

The glass fiber-reinforced thermosetting resin layers were formed on both surfaces of the resulting expanded beads molded body in the same manner as in Example 1. In the resulting composite laminated body, the polystyrene resin having inferior solvent resistance was dissolved in the styrene component of the thermosetting resin, and the thickness of the polystyrene resin expanded beads molded body was reduced by half to approximately 10 mm. The density of the composite laminated body was increased, and the composite laminated body was not able to be applied to practical use.

The compositions, the constitutions, the properties, the evaluation results and the like of the expanded beads, the expanded beads molded body, and the composite laminated body of Comparative Example 2 are shown in Table 1.

Comparative Examples 3 and 4

Mixed resins Sa7 and Sa8 for the cover layer were prepared in the same manner as in Example 1 except that the mixing ratio in terms of weight ratio of the polyolefin resin (A) of the cover layer and the polyester resin as the resin (B) was changed to 95/5 (Comparative Example 3) and 10/90 (Comparative Example 4), and expanded beads were produced therewith.

In Comparative Example 3, the laminated composite body was inferior in adhesiveness as similar to Comparative Example 1 due to the too large proportion of the polypropylene resin in the cover layer.

In Comparative Example 4, the core layer and the cover layer of the expanded beads were released off from each other due to the too small proportion of the polypropylene resin in the cover layer. Furthermore, the expanded beads molded body had a low fusion ratio and a low bending elasticity. Moreover, the laminated composite body had a low bending elasticity.

The compositions, the constitutions, the properties, the evaluation results and the like of the expanded beads, the expanded beads molded bodies, and the composite laminated bodies of Comparative Examples 3 and 4 are shown in Table 1.

Table 1

| | | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|---|
| Resin beads* | Core layer | Polyolefin resin | kind | PP1 | PP1 | PP1 | PP1 | PP1 | PP1 | PP1 | PP1 | PS2 | PP1 | PP1 |
| | Cover layer | name | | Sa1 | Sb | Sa2 | Sa3 | Sa4 | Sa5 | Sa6 | - | - | Sa7 | Sa8 |
| | | Mixed resin — (A) polyolefin resin (PO) | kind | PP2 | PP2 | PP2 | PP2 | PP2 | PP2 | PP2 | | | PP2 | PP2 |
| | | | % by weight | 60 | 60 | 20 | 40 | 75 | 90 | 60 | | | 95 | 10 |
| | | Mixed resin — (B) polyester resin (PES) | kind | PES1 | - | PES1 | PES1 | PES1 | PES1 | PES1 | - | - | PES1 | PES1 |
| | | | % by weight | 40 | - | 80 | 60 | 25 | 10 | 40 | | | 5 | 90 |
| | | Mixed resin — (B) polystyrene resin (PS) | kind | - | PS1 | - | - | - | - | - | | | - | - |
| | | | % by weight | - | 40 | - | - | - | - | - | | | - | - |
| | | (A)/(B) | weight ratio | 60/40 | 60/40 | 20/80 | 40/60 | 75/25 | 90/10 | 60/40 | | | 95/5 | 10/90 |
| | | Compatibilizing agent — styrene elastomer | kind | CA1 | CA1 | CA1 | CA1 | CA1 | CA1 | - | | | CA1 | CA1 |
| | | | part by weight | 10 | 10 | 10 | 10 | 10 | 10 | - | | | 10 | 10 |
| | Core layer/Cover layer | | weight ratio | 85/15 | 85/15 | 85/15 | 85/15 | 85/15 | 85/15 | 85/15 | - | - | 85/15 | 85/15 |

16

(continued)

| | | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|---|
| Expand-ed beads* | Foaming condition | Foaming agent | kind | - | $CO_2$ | $CO_2$ | $CO_2$ | $CO_2$ | $CO_2$ | $CO_2$ | $CO_2$ | $CO_2$ | butane | $CO_2$ | $CO_2$ |
| | | | amount added | part by weight | 7 | 8 | 8 | 8 | 8 | 8 | 8 | 6 | 8 | 8 | 8 |
| | | Foaming temperature | | °C | 148.5 | 148.0 | 148.0 | 148.0 | 148.0 | 148.0 | 148.0 | 150.0 | 98 | 148.0 | 148.0 |
| | Properties | Apparent density | | g/L | 59.5 | 56.7 | 57.6 | 56.5 | 54.5 | 56.7 | 57.6 | 58.5 | 59.8 | 59.5 | 55.6 |
| | | Calorific value of the high temperature peak | | J/g | 15.4 | 12.9 | 12.7 | 12.9 | 13.6 | 11.9 | 13.1 | 14.9 | - | 13.1 | 14.2 |
| | | Closed cell ratio | | % | 92 | 91 | 92 | 93 | 92 | 92 | 91 | 95 | 93 | 93 | 91 |
| | | Average foam cell diame-ter | | μm | 97 | 162 | 123 | 126 | 118 | 143 | 107 | 173 | 20 | 101 | 136 |
| Expanded beads molded body* | Bulk density | | | g/L | 42.3 | 39.5 | 39.1 | 38.0 | 37.2 | 39.0 | 38.0 | 42.1 | 40.4 | 42.5 | 39.1 |
| | Fusion ratio | | | % | 100 | 100 | 20 | 100 | 100 | 100 | 100 | 100 | 100 | 100 | 0 |
| | Bending elasticity | | | MPa | 7.4 | 7.0 | 4.9 | 6.1 | 5.1 | 5.7 | 5.8 | 6.5 | 11.8 | 6.7 | 4.7 |
| Compos-ite lami-nated body | Bulk density of composite laminated body | | | g/L | 125 | 116 | 120 | 119 | 115 | 119 | 122 | 121 | 203 | 122 | 118 |
| | Adhesiveness of thermosetting resin layer and expanded beads molded body | | | - | A | A | A | A | A | A | A | B | A | B | A |
| | Shape retaining property of expanded beads molded body | | | - | A | A | A | A | A | A | A | A | B | A | A |
| | Bending elasticity | | | MPa | 70.5 | 78.5 | 53.5 | 60.3 | 61.3 | 58.7 | 60.4 | 33.7 | - | 35.1 | 37.3 |
| | Bending elasticity/bulk density of composite laminated body | | | MPa/(g/L) | 0.56 | 0.68 | 0.45 | 0.51 | 0.53 | 0.49 | 0.50 | 0.28 | - | 0.29 | 0.32 |

* not claimed

Industrial Applicability

According to the present invention, a composite laminated body containing a polyolefin foam molded body as a core material having on at least one surface thereof a thermosetting resin layer containing a fibrous material adhered, united and laminated thereon is obtained, and can be applied to the known purposes of FRP, such as a bathtub, a water tank, a swimming pool, a temporary lavatory, a chair, a waterproof pan, a vehicle panel, a vehicle body, a ship body, a float, a surfboard, a snowboard, a helmet, a jet ski bike, a modular bath, and a fishery container. The polyolefin expanded beads can be applied to an expanded beads molded body for new purposes, such as a vehicle door panel and a chassis for a solar thermal power generation device (not claimed).

**Claims**

1.  Use of polyolefin resin expanded beads for producing a composite laminated body, wherein the polyolefin resin expanded beads comprise multi-layer expanded beads containing a core layer in a foamed state containing a polyolefin resin and a cover layer coated on the core layer, the cover layer containing a mixed resin of a polyolefin resin (A) and at least one resin (B) selected from a polystyrene resin and a polyester resin, and the mixed resin having a weight ratio (A/B) of the polyolefin resin (A) and the resin (B) of from 15/85 to 90/10,
    wherein the composite laminated body comprises a thermosetting resin layer containing a fibrous material.

2.  Use of the polyolefin resin expanded beads according to claim 1, wherein a melting point (Ts) of the polyolefin resin (A) contained in the cover layer is lower than a melting point (Tc) of the polyolefin resin contained in the core layer.

3.  Use of the polyolefin resin expanded beads according to claim 1 or 2, wherein the mixed resin contained in the cover layer further contains a compatibilizing agent of the polyolefin resin (A) and the resin (B), and a content of the compatibilizing agent is from 1 to 20 parts by weight per 100 parts by weight of the total amount of the polyolefin resin (A) and the resin (B).

4.  Use of the polyolefin resin expanded beads according to any one of claims 1 to 3, wherein the polyolefin resin contained in the core layer is a polypropylene resin.

5.  A composite laminated body comprising a polyolefin resin expanded beads molded body and a thermosetting resin layer laminated and adhered to a surface of the molded body,
    wherein the polyolefin resin expanded beads molded body is obtained through in-mold molding of polyolefin resin expanded beads,
    and wherein the polyolefin resin expanded beads comprise multi-layer expanded beads containing a core layer in a foamed state containing a polyolefin resin and a cover layer coated on the core layer, the cover layer containing a mixed resin of a polyolefin resin (A) and at least one resin (B) selected from a polystyrene resin and a polyester resin, and the mixed resin having a weight ratio (A/B) of the polyolefin resin (A) and the resin (B) of from 15/85 to 90/10,
    wherein the thermosetting resin layer further contains a fibrous material.

6.  The composite laminated body according to claim 5,
    wherein a resin contained in the thermosetting resin layer is an unsaturated polyester resin.

**Patentansprüche**

1.  Verwendung expandierter Polyolefinharzperlen zur Herstellung eines beschichteten Verbundkörpers, wobei die expandierten Polyolefinharzperlen mehrschichtige expandierte Perlen umfassen, die eine Kernschicht in einem aufgeschäumten Zustand enthalten, die ein Polyolefinharz enthält, und eine auf die Kernschicht aufgezogene Deckschicht, wobei die Deckschicht ein gemischtes Harz aus einem Polyolefinharz (A) und mindestens einem Harz (B) enthält, das ausgewählt ist aus einem Polystyrolharz und einem Polyesterharz, und das gemischte Harz ein Gewichtsverhältnis (A/B) des Polyolefinharzes (A) und des Harzes (B) von 15/85 bis 90/10 aufweist,
    wobei der beschichtete Verbundkörper eine Schicht wärmehärtenden Harzes umfasst, die ein Fasermaterial enthält.

2.  Verwendung der expandierten Polyolefinharzperlen gemäß Anspruch 1, wobei der Schmelzpunkt (Ts) des in der Deckschicht enthaltenen Polyolefinharzes (A) niedriger ist als der Schmelzpunkt (Tc) des in der Kernschicht enthaltenen Polyolefinharzes.

**3.** Verwendung der expandierten Polyolefinharzperlen gemäß Anspruch 1 oder 2, wobei das in der Deckschicht enthaltene gemischte Harz darüber hinaus ein Kompatibilisierungsmittel des Polyolefinharzes (A) und des Harzes (B) enthält, und der Gehalt des Kompatibilisierungsmittels 1 bis 20 Gewichtsteile je 100 Gewichtsteilen der Gesamtmenge des Polyolefinharzes (A) und des Harzes (B) beträgt.

**4.** Verwendung der expandierten Polyolefinharzperlen gemäß einem der Ansprüche 1 bis 3, wobei das in der Kernschicht enthaltene Polyolefinharz ein Polypropylenharz ist.

**5.** Ein beschichteter Verbundkörper, der einen Formkörper expandierter Polyolefinharzperlen und eine auf die Oberfläche des Formkörpers aufgetragene und damit verbundene wärmehärtende Harzschicht umfasst, wobei der Formkörper expandierter Polyolefinharzperlen durch In-Mold-Formung der expandierten Polyolefinharzperlen erhalten wird, und wobei die expandierten Polyolefinharzperlen mehrschichtige expandierte Perlen umfassen, die eine Kernschicht in einem aufgeschäumten Zustand enthalten, die ein Polyolefinharz enthält, und eine auf die Kernschicht aufgezogene Deckschicht, wobei die Deckschicht ein gemischtes Harz aus einem Polyolefinharz (A) und mindestens einem Harz (B) enthält, das ausgewählt ist aus einem Polystyrolharz und einem Polyesterharz, und das gemischte Harz ein Gewichtsverhältnis (A/B) des Polyolefinharzes (A) und des Harzes (B) von 15/85 bis 90/10 aufweist, wobei die Schicht wärmehärtenden Harzes darüber hinaus ein Fasermaterial enthält.

**6.** Der beschichtete Verbundkörper gemäß Anspruch 5, wobei ein in der Schicht wärmehärtenden Harzes enthaltenes Harz einungesättigtes Polyesterharz ist.


**Revendications**

**1.** Utilisation de billes expansées de résine de polyoléfine pour produire un corps stratifié composite, où les billes expansées de résine de polyoléfine comprennent des billes expansées multicouche contenant une couche centrale dans un état de mousse contenant une résine de polyoléfine et une couche de couverture appliquée sur la couche centrale, la couche de couverture contenant une résine mixte d'une résine de polyoléfine (A) et d'au moins une résine (B) choisie parmi une résine de polystyrène et une résine de polyester, et la résine mixte ayant un rapport pondéral (A/B) de la résine de polyoléfine (A) et de la résine (B) allant de 15/85 à 90/10, dans laquelle le corps stratifié composite comprend une couche de résine thermodurcissable contenant un matériau fibreux.

**2.** Utilisation des billes expansées de résine de polyoléfine selon la revendication 1, dans laquelle un point de fusion (Ts) de la résine de polyoléfine (A) contenue dans la couche de couverture est inférieur à un point de fusion (Tc) de la résine de polyoléfine contenue dans la couche centrale.

**3.** Utilisation des billes expansées de résine de polyoléfine selon la revendication 1 ou 2, dans laquelle la résine mixte contenue dans la couche de couverture contient en outre un agent de compatibilité de la résine de polyoléfine (A) et de la résine (B), et une teneur en agent de compatibilité est comprise entre 1 et 20 partie(s) en poids pour 100 parties en poids de la quantité totale de la résine de polyoléfine (A) et de la résine (B).

**4.** Utilisation des billes expansées de résine de polyoléfine selon l'une quelconque des revendications 1 à 3, dans laquelle la résine de polyoléfine contenue dans la couche centrale est une résine de polypropylène.

**5.** Corps stratifié composite comprenant un corps moulé de billes expansées de résine de polyoléfine et une couche de résine thermodurcissable stratifiée et collée à une surface du corps moulé, dans lequel le corps moulé de billes expansées de résine de polyoléfine est obtenu par moulage dans un moule de billes expansées de résine de polyoléfine, et dans lequel les billes expansées de résine de polyoléfine comprennent des billes expansées multicouche contenant une couche centrale dans un état de mousse contenant une résine de polyoléfine et une couche de couverture appliquée sur la couche centrale, la couche de couverture contenant une résine mixte d'une résine de polyoléfine (A) et d'au moins une résine (B) choisie parmi une résine de polystyrène et une résine de polyester, et la résine mixte ayant un rapport pondéral (A/B) de la résine de polyoléfine (A) et de la résine (B) allant de 15/85 à 90/10, dans lequel la couche de résine thermodurcissable contient en outre un matériau fibreux.

**6.** Corps stratifié composite selon la revendication 5,

dans lequel une résine contenue dans la couche de résine thermodurcissable est une résine de polyester insaturé.

**EP 3 023 454 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7258450 A
- JP 9059417 A
- JP 10273551 A
- US 20090169895 A
- EP 2447311 A
- JP 4116125 B
- JP 4323858 B
- JP 4429522 B
- JP 60185816 A
- JP 46038359 B
- JP 51022951 B
- JP 4046217 B
- JP 6049795 B
- JP 6022919 B